# FASCICULE DE BREVET EUROPEEN

(11) **EP 1 102 504 B1**
(45) Date de publication et mention de la délivrance du brevet: **27.12.2006**
(21) Numéro de dépôt: 00403200.9
(22) Date de dépôt: 16.11.2000
(51) Int. Cl.: H04Q 7/30, H04L 12/56, H04L 29/06

(54) **Procédé et dispositif de transmission dans un canal à débit limité**
Verfahren und Vorrichtung zur Übertragung in einem Kanal mit begrenzten Datenraten
Method and device for transmitting in a limited throughput channel

(30) Priorité: 22.11.1999 FR 9914634
(43) Date de publication de la demande: 23.05.2001
(60) Demande divisionnaire: 05111981.6
(73) Titulaire: ALCATEL, 75008 Paris (FR)
(72) Inventeur: Dupuy, Pierre, 75017 Paris (FR)
(74) Mandataire: El Manouni, Josiane

(56) Documents cités:
- WO-A-97/37466
- WO-A-99/09724
- DE-A- 19 722 433
- "EUROPEAN DIGITAL CELLULAR TELECOMMUNICATIONS SYSTEM (PHASE 2);INBAND CONTROL OF REMOTE TRANSCODERS AND RATE ADAPTORS FOR FULL RATE TRAFFIC CHANNELS(GSM 08.60), EUROPEAN TELECOMMUNICATIONS STANDARDS INSTITUTE" EUROPEAN TELECOMMUNICATION STANDARD,ETS300597, juillet 1995 (1995-07), pages 1-29, XP002143755

## Description

La présente invention a pour objet un procédé et un dispositif de transmission utilisable essentiellement pour transmettre des données numériques, notamment des données formatées selon la norme GPRS. Dans une utilisation préférée, l'invention sera mise en oeuvre dans le cadre d'une transmission de données à un téléphone mobile, par exemple pour afficher sur un écran de ce téléphone mobile des résultats d'une visite d'un site Internet. L'invention est d'une manière plus générale destinée à l'adaptation du protocole de la norme GPRS aux matériels mis en oeuvre pour des transmissions radioélectriques de type GSM.

La mise en oeuvre du protocole GPRS a conduit à retenir certaines grandeurs, notamment certains débits, présentant des difficultés pratiques d'acheminement sur des voies utilisées en téléphonie. Par exemple en mode GSM, en 60 millisecondes, il est prévu de répartir treize trames. Ceci conduit les trames à avoir chacune une durée de 4,61538 millisecondes. Par rapport à cette durée de base de 60 millisecondes en mode GPRS, il est prévu d'envoyer trois messages de données, trois blocs de données, sur un circuit. Chaque message, ou bloc, de données est réparti conformément au mode GSM sur quatre fenêtres temporelles de chacune 577 microsecondes (dans le cas où il y a 8 fenêtres temporelles par trame). En pratique, ceci conduit donc à avoir un débit de un message de données par durée de 20 millisecondes. Il est en conséquence prévu un cadencement synchronisé à 20 millisecondes (50 Hz) des différents équipements de transmission intervenant d'une extrémité de la chaîne de transmission à l'autre.

Pour transmettre des données à un téléphone mobile, l'équipement fixe nécessaire comporte dans une station de base BS un équipement dit BSC, Base Station Controller, de contrôle de la station de base. Cet équipement BSC commande un équipement d'émission réception de station de base, BTS Base Transceiver Station, constituant une interface radioélectrique entre le contrôleur de station de base BSC et un téléphone mobile. Un contrôleur de station de base commande un ou plusieurs équipements BTS. Il gère la ressource radioélectrique : il alloue des canaux pour les appels et il effectue les décisions de transfert de station de base. L'allocation de canal comporte la désignation de fenêtres temporelles dans les trames et de fréquences porteuses ou de lois de codages pour les systèmes de type TDMA ou CDMA respectivement (accès multiple à répartition dans le temps, accès multiple à répartition par codage respectivement). De manière à limiter le coût des stations d'émission réception avec récepteur-émetteur fixe des équipements BTS, ceux ci n'effectuent aucun autre traitement qu'un traitement de conversion numérique analogique et un traitement de modulation et ou d'amplification. En pratique entre les contrôleurs de station de base, BSC, et les émetteurs-récepteurs de ces stations de base, BTS, les liaisons comportent des canaux calibrés à 16 Kilobits par seconde, en fait des canaux à 64 Kilobits par seconde mais capables d'acheminer chacun 4 voies. D'autres débits auraient pu être choisis. Néanmoins, pour des raisons de fabrication industrielle, les équipements en place et ceux qui doivent être installés sont réalisés maintenant avec une telle limite de débit

Le document WO 97 37466 A propose , dans un système de type GSM, de remplacer une connexion PCM (« Pulse Code Modulation ») entre TRAU (« Transcoder and Rate Adaptation Unit ») et stations de base par une connexion ATM (« Asynchronous Transfer Mode »).

Le document DE 197 22 433 A propose, dans un système de type DECT utilisant un mode de transmission synchrone entre stations de base et réseau extérieur ISDN, d'allouer plusieurs intervalles de temps sur l'interface radio à un même terminal mobile, pour la transmission de données.

Dans la transmission des paquets ou des messages de données selon le mode GPRS, plusieurs débits utiles sont par ailleurs envisagés. On distingue ainsi les schémas de codage (Coding Scheme) de type CS1, CS2, CS3 et CS4 capables respectivement d'acheminer des débits, en bits utiles, égaux à 8800 bits par seconde, 12800 bits par seconde, 15200 bits par seconde et 20800 bits par seconde respectivement. En pratique, les messages de bits transmissibles pendant une durée de 20 millisecondes (correspondant à la cadence GPRS) sont alors respectivement de 176 bits, 256 bits, 310 bits et 416 bits. Avec un débit dans le canal entre le contrôleur BSC et l'émetteur-récepteur BTS de station de base limité à 16 Kilobits par seconde, la durée de transmission de ces bits utiles est respectivement de 12 millisecondes, 17 millisecondes, 21 millisecondes ou 28 millisecondes. En théorie cette durée de transmission est inférieure à ces valeurs mais du fait de la nécessité d'incorporer une encapsulation des bits transmis sur le canal à 16 Kilobits, la durée nécessaire pour renvoyer ces données et cette signalisation conduit aux durées globales ci-dessus. Ces différents schémas de codage ont pour objet que, dans des trames de 1500 octets (soit 12 Kilobits), la contribution affectée à la redondance soit de moins en moins forte quand on passe du protocole CS1 au protocole CS4.

Quoi qu'il en soit, il apparaît nettement que la durée de transmission des données correspondant aux messages de données de type CS3 dure 21 millisecondes, soit plus que la période du cadencement GPRS. Il résulte de cette situation que l'émission d'un bloc de données, en codage de type CS3, conduira à une durée de transmission, entre le circuit BSC de contrôle de la station de base et le circuit BTS émetteur de cette station de base, supérieure à la période de cadencement. En conséquence, une période suivante de ce cadencement devra être neutralisée pour pouvoir, avec une troisième période, envisager la transmission d'un deuxième bloc selon ce schéma de codage CS3. On aboutit alors au paradoxe que, bien que le débit théorique de 15200 bits par seconde du schéma CS3 soit supérieur au débit de 12800 du schéma CS2, le débit réel réalisé selon ce schéma CS3 (avec une redondance moindre donc une plus grande fragilité vis à vis du canal) se réalise avec un débit d'environ 7700 bits par seconde. Ce débit est inférieur au débit du schéma CS2, qui en plus est mieux protégé.

Le but de l'invention est de faire en sorte, au moins pour le schéma de codage de type CS3 moins bien protégé, que le débit effectif soit supérieur au débit du schéma de codage CS2 mieux protégé. On verra alors qu'avec l'invention le débit utile de ce schéma CS3 sera égal à douze treizièmes du débit théorique, c'est-à-dire à 14,03 Kilobits par seconde. Ce qui conduit approximativement à une perte de 7,7% sur le débit théorique. D'une part, même avec cette réduction, le débit du schéma CS3 reste supérieur de 9,6% à celui du schéma CS2. D'autre part on montrera que, si le canal hertzien de transmission entre la station de base et le téléphone mobile n'est pas trop bon, le schéma CS3 peut alors supporter un taux d'erreur bit égal jusqu'à 8% sans que son débit en soit affecté outre mesure.

En ce qui concerne le schéma CS4, bien que l'invention lui soit aussi applicable, le débit utile sera réduit du débit théorique de 20,8 Kilobits par seconde à 14,4 Kilobits par seconde. C'est-à-dire presque le même (mais un peu mieux) que celui du schéma CS3. On notera toutefois que ce désavantage est de peu d'importance car les conditions normales de radiotransmission rendent ce schéma de codage la plupart du temps impraticable. En effet comme ce schéma n'est pas protégé par suffisamment de redondance, le taux d'erreur bit est très important. Le débit utile chute alors d'une manière très importante.

L'invention a aussi pour objet de remédier à ces inconvénients d'une manière particulièrement simple.

Une des solutions utilisables pour remédier à ce problème serait soit d'augmenter le débit utile des canaux de liaison entre les stations de contrôle BSC et les émetteurs-récepteurs BTS des stations de base, soit de placer dans les émetteurs-récepteurs BTS des stations de base tous les circuits effectuant l'adaptation, le décodage et la correction des protocoles des bits reçus et à transmettre. Cette solution présenterait cependant l'inconvénient de devoir équiper les émetteurs-récepteurs des stations de base avec des moyens de traitement, ce qui en augmenterait considérablement le coût alors que des ressources déjà disponibles dans les circuits de contrôle BSC peuvent réaliser ces fonctions d'adaptation et de conversion de protocole sans difficulté particulière. Sans entrer dans des détails, une adaptation ou conversion de protocole consiste, au moins pour l'essentiel, à transformer un code de transmission de paquets, utilisable en amont des circuits BSC de contrôle selon la norme GPRS, en un mode de transmission de circuits utilisable en aval. En effet les circuits de contrôle BSC, en effectuant la sélection des circuits connectés à l'abonné à atteindre, réalisent en une étape finale la commutation de circuits nécessaire pour acheminer le message.

Par rapport à ces solutions onéreuses on prévoit d'abandonner le mode de cadencement.

L'invention a donc pour objet un dispositif de transmission selon la revendication 1.

L'invention a également pour objet un transmetteur selon les revendications 5 et 6, et un procédé de transmission selon la revendication 10.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1: une représentation schématique d'un dispositif de transmission conforme à l'invention ;
- Figure 2: une représentation temporelle de différents schémas normalisés de transmission dans le protocole GPRS ;
- Figure 3 : une représentation temporelle de l'utilisation d'un canal entre les deux transmetteurs, dans l'état de la technique d'une part et selon l'invention d'autre part.

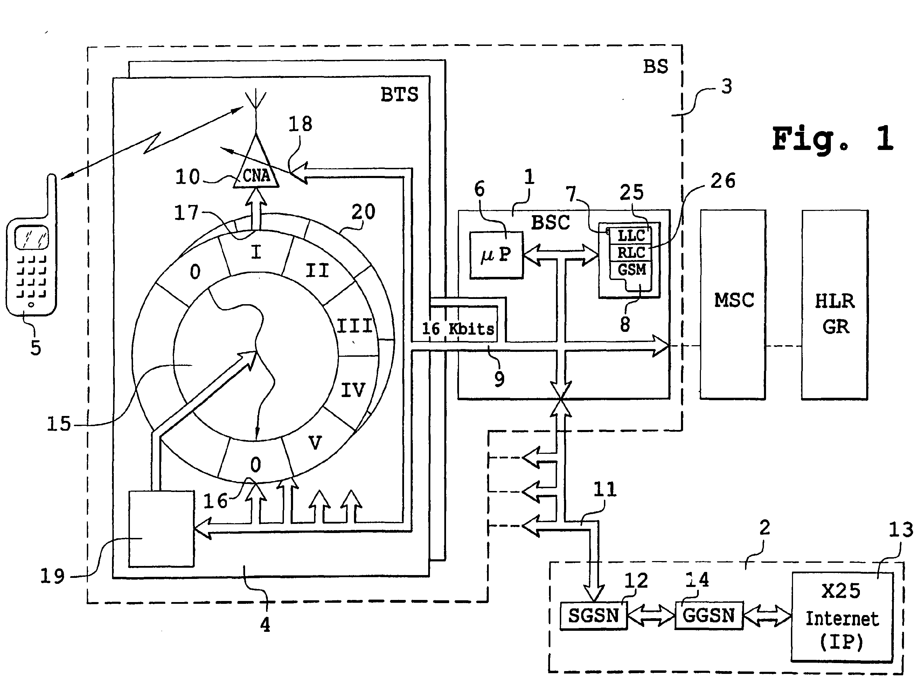

La figure 1 montre un dispositif de transmission selon l'invention. Ce dispositif de transmission comporte un premier transmetteur 1 recevant d'un émetteur 2 des messages de données formatées selon un premier protocole. Pour fixer les idées le transmetteur 1 est un circuit de contrôle de station de base, BSC, d'une station de base 3 BS. En pratique un même circuit de contrôle 1 peut gouverner un ou plusieurs deuxièmes transmetteurs tels que 4. Ici les deuxièmes transmetteurs 4 sont tout simplement des émetteurs récepteurs radioélectriques BTS constituant une interface radioélectrique entre le premier transmetteur, les circuits BSC 1, et des récepteurs, des téléphones mobiles tels que 5. Dans le cadre de la téléphonie mobile, ou plus généralement de la transmission de données à des mobiles, le circuit de contrôle 1 comporte des moyens, notamment des unités de traitement 6, mettant en oeuvre des programmes 7 pour gérer la communication de données entre les BTS 4 et les mobiles 5. Dans les programmes 7 cette gestion est identifiée par un sous-programme 8, ici intitulé GSM. Dans la pratique une BTS 4 reçoit par un canal de transmission 9 des données déjà formatées selon un protocole GSM. Dans la BTS 4, des traitements complexes sont entrepris. Notamment celle-ci est capable de mettre en oeuvre des méthodes de correction d'erreur (FEC = Forward Error Correction - correction d'erreur anticipé) et de détection d'erreur. Ces dernières méthodes permettent notamment de détecter si un bloc reçu est valide ou non. Les données sont, ici symboliquement, transmises à un convertisseur numérique analogique 10 de la BTS 4. Ce convertisseur numérique analogique 10 est capable par ailleurs d'effectuer une modulation et une amplification à gain variable de signaux radioélectriques destinées au mobile 5. De préférence, pour réduire les coûts, dans une BTS 4 se trouvent seulement mis en place une partie émission (et une partie réception) radioélectrique ainsi qu'une modulation et une conversion numérique analogique. Ces circuits sont très simples. Le canal 9 présente par ailleurs l'inconvénient d'avoir été calibré à un débit limité, ici d'une manière commune à 16 Kilobits. Cet inconvénient a en contrepartie un avantage: les équipements des stations de base peuvent être normalisés et être bon marché.

L'émetteur 2 est ici un émetteur émettant sur un canal de transmission 11 des signaux de données formatés selon la norme GPRS, General Packet Radio Service - Service Général de Transmission de Paquets Radio. Comme indiqué dans le livre "Réseau GSM-DCS" de Xavier Lagrange et Al, Editions Hermès, Paris 1997, pages 326 et suivantes, le service GPRS définit une architecture de réseau à commutation par paquets avec gestion de la mobilité et accès par voie radio. Un réseau GPRS peut être relié à divers réseaux de données fixes reposant sur différents protocoles : IP (Protocole Internet - Internet Protocol) mais aussi X25, protocole orienté connexion, et CLNP (Connexion Less Network Protocole - Protocole Réseau sans Connexion). En outre plusieurs réseaux GPRS peuvent de plus être reliés entre eux.

La figure 1 montre à cet effet que l'émetteur 2 comporte un noeud 12 de support du service GPRS (SGSN, Serving GPRS Support Node) qui est relié à une ou plusieurs stations de base telles que 3. Le noeud 12 est connecté à un réseau 13 de transmission par paquets, un réseau X25 ou le réseau Internet par exemple, par l'intermédiaire d'un noeud support de passerelle 14 (GGSN, Gateway GPRS Support Node). Le noeud passerelle 14 peut être relié à un ou plusieurs réseaux de données tels que le réseau 13. Le noeud 14 est un routeur qui permet aux paquets venant de réseaux de données externes d'être acheminés, via le noeud 12, vers la station de base 3, en particulier les circuits de contrôle 1 de cette station de base 3.

Dans ce qui vient à être décrit, le premier transmetteur 1 reçoit les données selon un protocole GPRS de l'émetteur 2, et les transmet au deuxième transmetteur 4 selon un deuxième protocole, ici le protocole GSM. Le deuxième transmetteur, la station de base 4, les transmet au récepteur 5.

Selon une caractéristique de l'invention, le deuxième transmetteur, ici la BTS 4, comporte une mémoire tampon 15 ici de préférence du type premier entré premier sorti. Elle n'est pas nécessairement de ce type si chaque paquet comporte un numéro d'ordre. Pour simplifier la représentation, on a montré une mémoire 15 sous la forme d'une mémoire tournante avec une entrée 16 d'écriture dans la mémoire 15, et une sortie 17 de lecture de cette mémoire 15. Bien entendu, mécaniquement la mémoire ne tourne pas, mais tout simplement des pointeurs d'adresses d'écriture et d'adresses de lecture permettent d'écrire de nouvelles données dans des nouvelles cellules de la mémoire 15, et d'y prélever respectivement des données qui y ont été écrites préalablement. Le bus 9 est ainsi relié d'une part à l'entrée 16 et d'autre part à une entrée 18 de commande des circuits 10 de conversion numérique analogique, de modulation, d'amplification et d'émission radioélectrique. L'entrée 18 qui reçoit la signalisation accompagnant les paquets à transmettre permet d'effectuer le réglage des circuits 10. Ainsi montrée, la mémoire 15 est de préférence du type premier entré premier sorti, des messages I à V y étant mémorisé dans cet ordre avant d'en être extrait dans cet ordre. En réception le même type de connexion est réalisé.

Dans un perfectionnement de l'invention, la mémoire 15 est agrémentée d'un décodeur 19, également relié au bus 9, et capable de recevoir une instruction de retransmission d'un message préalablement stocké et qui a déjà été émis. Par exemple la mémoire 15 comporte dans ses différentes cellules des messages de rang 0, I, II, III, IV, V et ainsi de suite. Le message I est en train d'être émis par les circuits 10. Après l'émission du message I, le message II devra être émis. Puis le message III et le message IV et ainsi de suite. En temps normal, le pointeur 17 de lecture de la mémoire 15 adresse des différentes cellules de celle-ci pour y prélever ces messages I, II, III, IV, V et ainsi de suite. Il peut arriver que le message de rang 0 n'ait pas été bien reçu par le mobile 5.

Selon le perfectionnement, le décodeur 19 en décodant une instruction pourra alors soit déplacer temporairement le pointeur de lecture 17 pour qu'il vienne relire à un moment donné le message de rang 0, et donc le réémettre, soit prévoir la réécriture du message de rang 0 à la suite du message de rang V dans la mémoire 15, pour que ce message puisse être réémis ultérieurement. L'instruction ainsi exécutée a pour but d'éviter d'avoir à retransmettre par le canal 9, à débit limité, le contenu du message 0 dont le circuit de contrôle 1 sait qu'il a été mal reçu par le récepteur 5, et que cette connaissance de cette mauvaise réception se produit alors que le message 0 est encore mémorisé dans la mémoire 15. En agissant ainsi on évitera d'avoir à retransmettre le message de rang 0 mal reçu deux fois sur le bus 9.

Autant il est possible à un circuit de contrôle 1 de gouverner plusieurs BTS telles que 4, autant il est possible à un circuit de contrôle 1 de gouverner, pour une même BTS 4 plusieurs canaux tels que 9 alimentant plusieurs mémoires tampons telles que 15, par exemple la mémoire 20. Dans ce cas, on peut encore augmenter l'efficacité du perfectionnement apporté par l'invention. En effet selon un mode amélioré, il est prévu avec une nouvelle modulation d'atteindre des débits de 60 Kilobits par fenêtre temporelle. Dans ce cas, la modulation radioélectrique du circuit 10 sera modifiée. Dans ces conditions, il pourra être envisageable de faire passer le schéma CS4. Dans ce cas, on pourra alimenter avec les différents canaux tels que 9 les différentes mémoires 15 ou 20 ou plus généralement une mémoire commune de taille plus importante. Si un message, tel que le message 0, doit alors être répété, il n'y aura alors pas de nécessité que ce message soit répété sur une même fenêtre temporelle.

Alors que la description a été faite jusqu'à présent avec un adressage implicite entre un canal 9 de 16 Kilobits et une fenêtre temporelle radioélectrique, en émission GSM, il existera dans l'avenir un adressage explicite. Soit cet adressage explicite sera véhiculé par un canal de signalisation entre le circuit de contrôle 1 et la BTS 4. Soit cet adressage explicite sera transmis en mode paquets dans les messages tels que I à V que la BTS 4 sera alors capable d'interpréter. Dans ces conditions la désignation d'une fenêtre temporelle pourra être effectuée au dernier moment et la mémoire tampon d'autant plus intéressante.

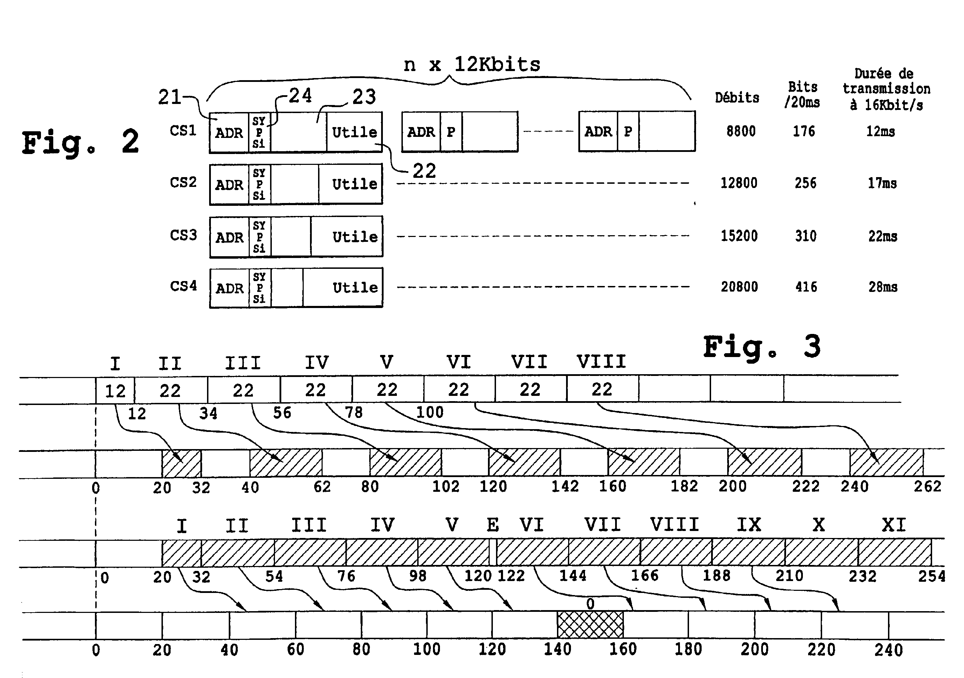

La figure 2 montre en résumé les différents schémas de codage CS1 à CS4 utilisables pour transmettre des données selon le protocole GPRS. Selon ce protocole, des trames de 1500 octets, soit 12 Kilobits, sont véhiculées par paquets. Chaque paquet comporte une partie d'adresse 21, une partie de données utiles 22 et une partie 23 de redondance de données utiles. En outre chaque paquet comporte des indications SY de synchronisation, P de puissance d'émission, et SI de signalisation. Les signaux de synchronisation permettent de cadencer le fonctionnement de la BTS 4. Ici ils sont exploités au moins pour cadencer le pointeur 17 de lecture. Les signaux P de puissance sont d'une manière connue utilisés pour commander par l'entrée 18 le fonctionnement en puissance des circuits d'émission 10. Les signaux de signalisation sont des signaux de types divers, et peuvent notamment comporter dans l'invention des instructions décodables par le décodeur 19. D'un schéma, CS1, à l'autre, CS4, la partie utile de données devient plus importante alors que la partie de redondance se réduit. Ceci conduit à des débits utiles variant de 8800 bits par seconde à 20800 bits par seconde. Les bits utiles transmissibles par période de 20 millisecondes passent alors de 176 à 416 comme indiqué ci-dessus. Pour chaque message ainsi désigné, la durée de transmission, sur un canal de transmission à 16 Kilobits conduit à des durées allant de 12 millisecondes à 28 millisecondes. Les circuits de traitement 6 et 7 effectuent un traitement 25, 26 (LLC, RLC) de type connu. Ils sont capables d'extraire des paquets reçus sur le bus 11 les bits utiles à transmettre sur le bus 9. Ils les transmettent selon un format GSM en les agrémentant de signaux de signalisation.

La figure 3 montre le mode de transmission dans l'état de la technique et selon l'invention respectivement. Sur une première ligne du haut de la figure 3 sont séquentiellement présentés, dans le temps, des messages à transmettre, numérotés de I à VIII et dont des durées de transmission selon leur schéma de codage sont rappelées. Ces durées valent 12 millisecondes ou 22 millisecondes dans l'exemple. Dans une deuxième ligne du haut de la figure, on a montré les effets du cadencement imposé par la mise en oeuvre directe de la norme GPRS, sans désynchronisation, sans temps d'attente. La deuxième ligne montre en effet l'occupation du canal 9 quand il est piloté selon la norme GPRS. Dans ce cas des fenêtres temporelles de 20 millisecondes sont prévues. Pour qu'un message de données, par exemple le message I, puisse être transmis dans une fenêtre temporelle il faut d'abord qu'il ait été complètement reçu dans les circuits 1 avant le début de la fenêtre temporelle qui le concerne pour sa transmission. Ceci est par exemple le cas au bout de 20 millisecondes pour le message I, et ce message I peut être transmis pendant une durée de 12 millisecondes pendant une deuxième fenêtre. Entre les dates comprises entre 32 millisecondes, fin de transmission du message I, et 40 millisecondes, début de la troisième fenêtre, le canal 9 est inoccupé. A 40 millisecondes, le message II qui a été reçu entre les dates 12 millisecondes et 34 millisecondes peut être transmis pendant la troisième fenêtre temporelle débutant à la date 40 millisecondes. Mais le message II est transmis pendant 22 millisecondes, soit en partie pendant la quatrième fenêtre temporelle de 60 millisecondes à 80 millisecondes. En conséquence cette quatrième fenêtre laisse le canal 9 libre de toute transmission pendant les 18 millisecondes restantes. Ainsi de suite, on montre qu'en schéma CS3, l'occupation du canal 9 est presque égale à la moitié de son occupation maximale théorique. On arrive alors au paradoxe énoncé ci-dessus que le débit avec un schéma de codage CS3, a priori avec un débit plus fort, est au contraire plus pénalisé que le mode de codage CS2 avec un débit moins fort.

Dans l'invention on a abandonné pour le canal 9 le cadencement de 20 millisecondes. En conséquence dans ce canal 9 les transmissions se font en mode asynchrone. Il en résulte, troisième ligne de la figure 3, que les transmission des messages I à XI se font en exploitant au mieux le débit du canal 9. La troisième ligne montre à la fois l'occupation du canal 9 et l'entrée de la mémoire 15. De la même façon que pour la deuxième ligne de la figure 3, troisième ligne, la mémoire tampon 15 est chargée par le message I pendant une durée située entre les dates 20 millisecondes et 32 millisecondes. En conséquence, pendant la fenêtre temporelle de 20 millisecondes à 40 millisecondes aucun message ne peut être émis par la BTS 4 en direction du récepteur 5. Le message I, de 12 millisecondes, est émis pendant la fenêtre temporelle de 40 à 60 millisecondes.

En équipant le transmetteur BTS de la station de base d'un équipement très simple: une mémoire tampon, de préférence du type premier entré premier sorti, le principe est alors le suivant : on stocke à l'avance, en mode asynchrone, dans le transmetteur BTS les blocs à transmettre. Puis on les prélève dans la mémoire tampon au rythme correspondant à la transmission GSM. En ce qui concerne la transmission GSM, un taux théorique maximum égal à 250 Kilobits par seconde entre un transmetteur BTS et un mobile est envisageable (dans le cas où toutes les fenêtres temporelles des trames seraient affectées à un même téléphone mobile). Il n'y a aucun risque de voir la mémoire se saturer. Dans ces conditions on est capable d'utiliser la liaison de transmission entre les circuits de contrôle BSC et le transmetteur BTS au maximum de ses capacités : à 16 Kilobits par seconde.

Comme on l'a indiqué précédemment, le mode de transmission GSM possède un débit supérieur à 16 Kilobits. Avec un tel débit supérieur, pendant la quatrième période de 60 à 80 millisecondes, le message Il disponible dans la mémoire 15 peut être envoyé par la station de base en direction du mobile 5. On peut facilement vérifier que le message V, dont la transmission commence à la date 120 millisecondes, avait pu être envoyé à la mémoire 15 entre la période située entre 98 et 120 millisecondes. Par contre, le message VI dont la réception par la mémoire 15 se termine à la date 144 millisecondes, est indisponible pour une transmission pendant la fenêtre suivante de 140 à 160 millisecondes. Celle-ci doit donc être neutralisée. On notera que les ordres de neutralisation et de commande de la mémoire 15 peuvent être envoyés comme des données de signalisation dans les messages transmis et décodés par le décodeur 19. Il en résulte que le message VI sera seulement émis par la station de base 4 entre les dates 160 et 180 millisecondes. Ainsi de suite on constate qu'à la date 260 millisecondes, avec l'invention, on a pu envoyer le message X alors qu'avec la solution de l'état de la technique seuls les messages I à VII avaient été envoyés. Ceci montre d'une manière claire le gain de débit procuré par l'invention. On constate que ce gain de débit est réalisé malgré la faiblesse du débit du canal 9 et en respectant par ailleurs le cadencement du mode GPRS.

Dans l'état de la technique comme dans l'invention il est possible que du fait de la moins grande résistance du schéma de codage CS3 vis à vis des bruits du canal de transmission hertzien certains messages, par exemple un message 0 comme évoqué ci-dessus n'ait pas été envoyé avec succès. Dans l'état de la technique il faudrait considérer le message 0 comme un des messages à envoyer et par conséquent la réémission de ce message ferait encore baisser le rendement des transmissions puisque ce message devrait être réémis dans le canal 9, sous le contrôle des circuits de contrôle 1. Dans l'invention alors que le message V a été émis et que le message VI n'est pas encore complètement arrivé on peut, en déplaçant notamment le pointeur de lecture 17, relire le message 0 et le faire renvoyer par la station de base 4 à destination du téléphone mobile 5 pendant la période de 140 à 160 millisecondes. Ceci peut être obtenu en interposant dans la transmission des messages sur le canal 9 une instruction E représentative d'une erreur de transmission et désignant le message 0. La transmission de l'instruction E, qui doit être par ailleurs décodée par le décodeur 19, prend en elle-même une durée faible, de l'ordre de 2 millisecondes. Cette durée est très faible comparée à la retransmission du message 0 qui aurait pu durer jusqu'à 22 millisecondes. Ce faisant on peut montrer que malgré l'existence des durées de neutralisation, le procédé de l'invention est capable d'effectuer les transmissions en schéma CS3 avec un débit supérieur au schéma CS2 comme on l'avait indiqué ci-dessus alors que dans l'état de la technique du fait des synchronisations des différents protocoles ces résultats ne pouvaient être atteints.

## Revendications

1. - Dispositif de transmission comportant un premier transmetteur (1) de type BSC recevant d'un émetteur (2) des messages de données formatées selon un premier protocole utilisant un mode de transmission de paquets et convertissant des données ainsi reçues en des données formatées selon un deuxième protocole utilisant un mode de transmission de circuits, un deuxième transmetteur (4) de type BTS relié au premier transmetteur recevant les messages de données formatées selon le deuxième protocole et les transmettant selon un mode synchrone à un récepteur (5), un canal (9) de transmission à débit limité reliant les deux transmetteurs, **caractérisé en ce que**, lesdits messages de données formatées selon ledit deuxième protocole pouvant avoir différentes longueurs possibles, le premier protocole comportant plusieurs débits (CS1, CS2, CS3, CS4) de transmission de bits utiles, le débit de transmission des bits utiles du canal de transmission à débit limité étant de valeur intermédiaire entre les débits du premier protocole, ledit dispositif comporte des moyens pour transmettre sur ledit canal de transmission à débit limité, et selon un mode asynchrone, lesdits messages de données pouvant avoir différentes longueurs possibles.

2. - Dispositif selon la revendication 1, **caractérisé en ce qu'**il comporte dans le deuxième transmetteur une mémoire tampon (15) interposée dans une voie de transmission de ce deuxième transmetteur pour mémoriser des messages reçus puis les transmettre au récepteur.

3. - Dispositif selon la revendication 2, **caractérisé en ce que** le deuxième transmetteur comporte un décodeur (19) pour recevoir une instruction de retransmission d'un message (0) et pour modifier un ordre déterminé de retransmission, ou pour mémoriser dans la mémoire tampon une copie d'un message à retransmettre.

4. - Dispositif selon l'une des revendications 2 ou 3, **caractérisé en ce que** la mémoire tampon est du type premier entré premier sorti.

5. - Transmetteur (1) de type BSC recevant d'un émetteur (2) des messages de données formatées selon un premier protocole, utlisant un mode de transmission de paquets, et convertissant des données ainsi reçues en des données formatées selon un deuxième protocole utilisant un mode de transmission de circuits, ledit transmetteur étant dit premier transmetteur transmettant les messages de données formatées selon le deuxième protocole à un deuxième transmetteur (4) de type BTS, un canal (9) de transmission à débit limité reliant les deux transmetteurs, **caractérisé en ce que**, lesdits messages de données formatées selon ledit deuxième protocole pouvant avoir différentes longueurs possibles, le premier protocole comportant plusieurs débits (CS1, CS2, CS3, CS4) de transmission de bits utiles, le débit de transmission des bits utiles du canal de transmission à débit limité étant de valeur intermédiaire entre les débits du premier protocole, ledit premier transmetteur comporte des moyens pour transmettre sur ledit canal de transmission à débit limité, et selon un mode asynchrone, lesdits messages de données pouvant avoir différentes longueurs possibles.

6. - Transmetteur (4) de type BTS, dit deuxième transmetteur, relié à un transmetteur dit premier transmetteur de type BSC recevant d'un émetteur (2) des messages de données formatées selon un premier protocole, et convertissant des données ainsi reçues en des données formatées selon un deuxième protocole utilisant un mode de transmission de circuits, ledit deuxième transmetteur relié au premier transmetteur recevant les messages de données formatées selon le deuxième protocole et les transmettant selon un mode synchrone à un récepteur (5), un canal (9) de transmission à débit limité reliant les deux transmetteurs, **caractérisé en ce que**, lesdits messages de données formatées selon ledit deuxième protocole pouvant avoir différentes longueurs possibles, le premier protocole comportant plusieurs débits (CS1, CS2, CS3, CS4) de transmission de bits utiles, le débit de transmission des bits utiles du canal de transmission à débit limité étant de valeur intermédiaire entre les débits du premier protocole, ledit deuxième transmetteur comporte des moyens pour recevoir sur ledit canal de transmission à débit limité, et selon un mode asynchrone, lesdits messages de données pouvant avoir différentes longueurs possibles.

7. - Transmetteur selon la revendication 6, **caractérisé en ce qu'**il comporte une mémoire tampon (15) interposée dans une voie de transmission de ce transmetteur pour mémoriser des messages reçus puis les transmettre au récepteur.

8. - Transmetteur selon la revendication 7, **caractérisé en ce qu'**il comporte un décodeur (19) pour recevoir une instruction de retransmission d'un message (0) et pour modifier un ordre déterminé de retransmission, ou pour mémoriser dans la mémoire tampon une copie d'un message à retransmettre.

9. - Transmetteur selon l'une des revendications 7 ou 8, **caractérisé en ce que** la mémoire tampon est du type premier entré premier sorti.

10. - Procédé de transmission comportant les étapes suivantes :
- une réception dans un premier transmetteur (1) de type BSC de messages de données formatées selon un premier protocole utilisant un mode de transmission de paquets, provenant d'un émetteur (2),
- une conversion (7) des données ainsi reçues en des données formatées selon un deuxième protocole utilisant un mode de transmission de circuits,
- la transmission des données formatées selon le deuxième protocole à un deuxième transmetteur de type BTS relié au premier transmetteur par un canal (9) de transmission à débit limité,
- une transmission (10) à un récepteur (5) par le deuxième transmetteur des données formatées selon le deuxième protocole, selon un mode synchrone,
- lesdits messages de données formatées selon ledit deuxième protocole pouvant avoir différentes longueurs possibles, le premier protocole comportant plusieurs débits (CS1, CS2, CS3, CS4) de transmission de bits utiles, le débit de transmission des bits utiles du canal de transmission à débit limité étant de valeur intermédiaire entre les débits du premier protocole, ledit procédé comporte
- et une transmission, sur ledit canal de transmission à débit limité, et selon un mode asynchrone, desdits messages de données pouvant avoir différentes longueurs possibles.

11. - Procédé selon la revendication 10, **caractérisé en ce qu'**il comporte:
- une mémorisation (15) de plusieurs messages reçus dans une mémoire tampon du deuxième transmetteur,
- cette mémorisation étant effectuée avant transmission au récepteur par ce deuxième transmetteur.

12. - Procédé selon la revendication 11, **caractérisé en ce que**
- on décode (19) dans le deuxième transmetteur une instruction de retransmission d'un message
- on mémorise dans la mémoire tampon une copie d'un message à retransmettre,
- et ou on modifie un ordre déterminé de retransmission.

13. - Procédé selon l'une des revendications 11 ou 12, **caractérisé en ce que** la mémorisation est du type premier entré premier sorti.

## Claims

1. Transmission apparatus comprising a first relay (1) of the BSC type receiving data messages formatted in a first protocol using a packet transmission mode from a transmitter (2) and converting the data received in this way into data formatted in a second protocol using a circuit transmission mode, a second relay (4) of the BTS type connected to the first relay and receiving the data messages formatted in the second protocol and transmitting them in a synchronous mode to a receiver (5), and a limited data rate transmission channel (9) interconnecting the two relays, the apparatus being **characterized in that** since said data messages formatted in said second protocol can be of different lengths, the first protocol having a plurality of data rates (CS1, CS2, CS3, CS4) for transmitting payload bits, the rate at which payload bits are transmitted over the limited data rate transmission channel being intermediate in value between the data rates of the first protocol, said apparatus includes means for transmitting said data messages that can be of different lengths over said limited data rate transmission channel in an asynchronous mode.

2. Apparatus according to claim 1, **characterized in that** it includes a buffer memory (15) in the second relay, interposed in a transmission path of said second relay to store received messages and then to transmit them to the receiver.

3. Apparatus according to claim 2, **characterized in that** the second relay includes a decoder (19) for receiving an instruction to retransmit a message (0) and for modifying a determined order of retransmission or for storing a copy of a message that is to be retransmitted in the buffer memory.

4. Apparatus according to claim 2 or claim 3, **characterized in that** the buffer memory is of the first-in-first-out type.

5. A relay (1) of the BSC type receiving data messages formatted in a first protocol using a packet transmission mode from a transmitter (2) and converting the data received in this way into data formatted in a second protocol using a circuit transmission mode, said relay being a "first relay" transmitting the data messages formatted in the second protocol to a second relay (4) of the BTS type, and a limited data rate transmission channel (9) interconnecting the two relays, the apparatus being **characterized in that** since said data messages formatted in said second protocol can be of different lengths, the first protocol having a plurality of data rates (CS1, CS2, CS3, CS4) for transmitting payload bits, the rate at which payload bits are transmitted over the limited data rate transmission channel being intermediate in value between the data rates of the first protocol, said first relay includes means for transmitting said data messages that can be of different lengths over said limited data rate transmission channel in an asynchronous mode.

6. A relay (4) of the BTS type, referred to as a second relay, connected to a relay of the BSC type, referred to as a first relay, receiving data messages formatted in a first protocol from a transmitter (2) and converting the data received in this way into data formatted in a second protocol using a circuit transmission mode, said second relay connected to the first relay and receiving the data messages formatted in the second protocol and transmitting them in a synchronous mode to a receiver (5), and a limited data rate transmission channel (9) interconnecting the two relays, the apparatus being **characterized in that** since said data messages formatted in said second protocol can be of different lengths, the first protocol having a plurality of data rates (CS1, CS2, CS3, CS4) for transmitting payload bits, the rate at which payload bits are transmitted over the limited data rate transmission channel being intermediate in value between the data rates of the first protocol, said second relay includes means for transmitting said data messages that can be of different lengths over said limited data rate transmission channel in an asynchronous mode.

7. A relay according to claim 6, **characterized in that** it includes a buffer memory (15) interposed in a transmission path of the relay to store received messages and then to transmit them to the receiver.

8. A relay according to claim 7, **characterized in that** it includes a decoder (19) for receiving an instruction to retransmit a message (0) and for modifying a determined order of retransmission or for storing a copy of a message that is to be retransmitted in the buffer memory.

9. A relay according to claim 7 or claim 8, **characterized in that** the buffer memory is of the first-in-first-out type.

10. A transmission method comprising the following steps:
· receiving, in a first relay (1) of the BSC type, data messages formatted in a first protocol using a packet transmission mode, and coming from a transmitter (2);
· converting (7) the data received in this way into data formatted in a second protocol using a circuit transmission mode;
· transmitting the data formatted in the second protocol to a second relay of the BTS type connected to the first relay by a limited data rate transmission channel (9);
· transmitting (10), in a synchronous mode, the data formatted in the second protocol from the second relay to a receiver (5);
· said data messages formatted in said second protocol being capable of having different lengths, the first protocol having a plurality of data rates (CS1, CS2, CS3, CS4) for transmitting payload bits, the rate at which payload bits are transmitted over the limited data rate transmission channel being intermediate in value between the rates of the first protocol, and said method including:
· transmitting said data messages capable of having different lengths over said limited data rate transmission channel in an asynchronous mode.

11. A method according to claim 10, **characterized in that** it includes:
storing (15) a plurality of received messages in a buffer memory of the second relay; and
· performing said storage prior to the second relay transmitting the messages to the receiver.

12. A method according to claim 11, **characterized in that**:
· a message retransmission instruction is decoded (19) in the second relay;
· a copy of a message to be retransmitted is stored in the buffer memory; and/or
· a determined retransmission order is modified.

13. A method according to claim 11 or claim 12, **characterized in that** storage is of the first-in-first-out type.

## Patentansprüche

1. - Übertragungsvorrichtung, umfassend eine erste Sendestation (1) des Typs BSC, die von einem Sender (2) nach einem ersten, im paketvermittelten Übertragungsmodus arbeitenden Protokoll formatierte Datennachrichten empfängt und die die auf diese Weise empfangenen Daten in Daten konvertiert, die nach einem zweiten Protokoll formatiert sind, das mit einem leitungsvermittelten Modus arbeitet; und eine zweite Sendestation (4) des Typs BTS, die mit der ersten Sendestation verbunden ist und die die nach dem zweiten Protokoll formatierten Datennachrichten empfängt und sie in einem synchronen Modus an einen Empfänger (5) überträgt; [und] einen Kanal (9) mit begrenzter Übertragungsrate, der die beiden Sendestationen verbindet, **dadurch gekennzeichnet, dass** die nach dem zweiten Protokoll formatierten Datennachrichten unterschiedliche mögliche Längen aufweisen können, wobei das Protokoll mehrere Übertragungsraten (CS1, CS2, CS3, CS4) für Nutzbits aufweist und wobei die Übertragungsrate für die Nutzbits des Übertragungskanals mit begrenzter Datenrate auf einem Mittelwert zwischen den Datenraten des ersten Protokolls liegt und wobei die Vorrichtung Mittel umfasst, um auf diesem Übertragungskanal mit begrenzter Datenrate und in einem asynchronen Modus die Datennachrichten zu übertragen, die unterschiedliche mögliche Längen aufweisen können.

2. - Vorrichtung nach Anspruch 1, **dadurch gekennzeichnet, dass** sie in der zweiten Sendestation einen Pufferspeicher (15) umfasst, der in einen Übertragungsweg dieser zweiten Sendestation eingefügt ist, um empfangene Nachrichten speichern und anschließend an den Empfänger übertragen zu können.

3. - Vorrichtung nach Anspruch 2, **dadurch gekennzeichnet, dass** die zweite Sendestation einen Decodierer (19) umfasst, um eine Anweisung zur erneuten Übertragung einer Nachricht (0) zu empfangen und um einen bestimmten Neuübertragungsbefehl abzuändern oder um in dem Pufferspeicher eine Kopie einer erneut zu übertragenden Nachricht zu speichern.

4. - Vorrichtung nach einem der Ansprüche 2 oder 3, **dadurch gekennzeichnet, dass** der Pufferspeicher dem FIFO-Typ entspricht.

5. - Sendestation (1) des Typs BSC, die von einem Sender (2) nach einem ersten, im paketvermittelten Übertragungsmodus arbeitenden Protokoll formatierte Datennachrichten empfängt und die die auf diese Weise empfangenen Daten in Daten konvertiert, die nach einem zweiten Protokoll formatiert sind, das mit einem leitungsvermittelten Modus arbeitet, wobei diese Sendestation, die als erste Sendestation bezeichnet wird, die nach dem zweiten Protokoll formatierten Datennachrichten an eine zweite Sendestation (4) des Typs BTS überträgt, wobei ein Übertragungskanal (9) mit begrenzter Übertragungsrate die beiden Sendestationen verbindet, **dadurch gekennzeichnet, dass** die nach dem zweiten Protokoll formatierten Datennachrichten unterschiedliche mögliche Längen aufweisen können, wobei das Protokoll mehrere Übertragungsraten (CS1, CS2, CS3, CS4) für Nutzbits aufweist und wobei die Übertragungsrate für die Nutzbits des Übertragungskanals mit begrenzter Datenrate auf einem Mittelwert zwischen den Datenraten des ersten Protokolls liegt und wobei die erste Sendestation Mittel umfasst, um auf diesem Übertragungskanal mit begrenzter Datenrate und in einem asynchronen Modus die Datennachrichten zu übertragen, die unterschiedliche mögliche Längen aufweisen können.

6. - Sendestation (4) des Typs BTS, genannt zweite Sendestation, die mit einer als erste Sendestation bezeichneten Sendestation des Typs BSC verbunden ist, welche von einem Sender (2) nach einem ersten Protokoll formatierte Datennachrichten empfängt und auf diese Weise empfangene Daten in nach einem zweiten Protokoll formatierte Daten konvertiert, welches mit einem leitungsvermittelten Modus arbeitet, wobei die mit der ersten Sendestation verbundene zweite Sendestation die nach dem zweiten Protokoll formatierten Datennachrichten empfängt und sie in einem synchronen Modus an einen Empfänger (5) überträgt, wobei ein Übertragungskanal (9) mit begrenzter Übertragungsrate die beiden Sendestationen verbindet, **dadurch gekennzeichnet, dass** die nach dem zweiten Protokoll formatierten Datennachrichten unterschiedliche mögliche Längen aufweisen können, wobei das Protokoll mehrere Übertragungsraten (CS1, CS2, CS3, CS4) für Nutzbits aufweist und wobei die Übertragungsrate für die Nutzbits des Übertragungskanals mit begrenzter Datenrate auf einem Mittelwert zwischen den Datenraten des ersten Protokolls liegt und wobei die zweite Sendestation Mittel umfasst, um auf diesem Übertragungskanal mit begrenzter Datenrate und in einem asynchronen Modus die Datennachrichten zu empfangen, die unterschiedliche mögliche Längen aufweisen können.

7. - Sendestation nach Anspruch 6, **dadurch gekennzeichnet, dass** sie einen Pufferspeicher (15) umfasst, der in einen Übertragungsweg dieser Sendestation eingefügt ist, um empfangene Nachrichten speichern und anschließend an den Empfänger übertragen zu können.

8. - Sendestation nach Anspruch 7, **dadurch gekennzeichnet, dass** sie einen Decodierer (19) umfasst, um eine Anweisung zur erneuten Übertragung einer Nachricht (0) zu empfangen und um einen bestimmten Neuübertragungsbefehl abzuändern oder um in dem Pufferspeicher eine Kopie einer erneut zu übertragenden Nachricht zu speichern.

9. - Sendestation nach einem der Ansprüche 7 oder 8, **dadurch gekennzeichnet, dass** der Pufferspeicher dem FIFO-Typ entspricht.

10. - Übertragungsverfahren, umfassend die folgenden Schritte:
- einen Empfang von nach einem ersten, im paketvermittelten Übertragungsmodus arbeitenden Protokoll formatierten Datennachrichten, die von einem Sender (2) kommen, in einer ersten Sendestation (1);
- eine Konvertierung (7) der auf diese Weise empfangenen Daten in nach einem zweiten Protokoll formatierte Daten, das mit einem leitungsvermittelten Modus arbeitet;
- die Übertragung der nach dem zweiten Protokoll formatierten Daten an eine zweite Sendestation des Typs BTS, die mit der ersten Sendestation durch einen Übertragungskanal (9) mit begrenzter Datenrate verbunden ist;
- eine Übertragung (10) der nach dem zweiten Protokoll formatierten Daten an einen Empfänger (5) in einem synchronen Modus
- wobei die nach dem zweiten Protokoll formatierten Datennachrichten unterschiedliche mögliche Längen aufweisen können, wobei das Protokoll mehrere Übertragungsraten (CS1, CS2, CS3, CS4) für Nutzbits aufweist und wobei die Übertragungsrate für die Nutzbits des Übertragungskanals mit begrenzter Datenrate auf einem Mittelwert zwischen den Datenraten des ersten Protokolls liegt; hierbei umfasst das Verfahren
- zudem eine Übertragung der Datennachrichten, die unterschiedliche mögliche Längen aufweisen können, auf dem Übertragungskanal mit begrenzter Datenrate und in einem asynchronen Modus.

11. -Verfahren nach Anspruch 10, **dadurch gekennzeichnet, dass** es umfasst:
- eine Speicherung (15) mehrerer in einem Pufferspeicher der zweiten Sendestation empfangenen Nachrichten;
- wobei diese Speicherung vor der Übertragung an den Empfänger durch diese zweite Sendestation erfolgt.

12. -Verfahren nach Anspruch 11, **dadurch gekennzeichnet, dass**
- in der zweiten Sendestation eine Anweisung zur Neuübertragung einer Nachricht decodiert wird (19);
- im Pufferspeicher eine Kopie einer erneut zu übertragenden Nachricht gespeichert wird;
- und ein bestimmter Befehl zur Neuübertragung abgeändert wird.

13. -Verfahren nach einem der Ansprüche 11 oder 12, **dadurch gekennzeichnet, dass** die Speicherung dem FIFO-Typ entspricht.
